# EUROPÄISCHE PATENTANMELDUNG

(11) **EP 2 012 049 A2**
(43) Veröffentlichungstag der Anmeldung: **07.01.2009**
(21) Anmeldenummer: 08012520.6
(22) Anmeldetag: 13.12.2001
(51) Int. Cl.: F16K 31/08, F16K 11/044, F25B 41/06, F25B 43/00

(54) **Kältemittelkreislauf und Magnetventil dafür**

(30) Priorität: 15.12.2000 DE 10062665
(62) Teilanmeldung aus: 01986409.9
(71) Anmelder: BSH Bosch und Siemens Hausgeräte GmbH, 81739 München (DE)
(72) Erfinder: Kordon, Rolf, 89537 Giengen (DE)
(74) Vertreter: Heuer, Wilhelm

(57) **Zusammenfassung**

Ein Magnetventil für einen Kältemittelkreislauf umfasst einen Ventilkörper (1), der einen Eingang (7) und wenigstens einen Ausgang (4) für das Kältemittel aufweist, ein im Innern des Ventilkörpers (1) zwischen zwei jeweils unterschiedlichen Schaltstellungen des Magnetventils entsprechenden Positionen bewegliches Ventilglied (8) und eine Spule (17) zum Erzeugen eines Magnetfeldes in Längsrichtung im Ventilkörper (1). Der wenigstens eine Ausgang (4) ist durch eine Kapillare (5) gebildet. Der Ventilkörper (1) ist außerhalb des Kerns der Spule (17) angeordnet. Die Spule (17) weist zwei den Ventilkörper berührende Polschuhe (23) zum Einkoppeln eines zur Längsachse des Ventilkörpers (1) parallelen Magnetfeldes in diesen auf.

## Beschreibung

Die vorliegende Erfindung betrifft ein Magnetventil für einen Kältemittelkreislauf nach dem Oberbegriff des Anspruchs 1 sowie einen Kältemittelkreislauf mit einem solchen Magnetventil.

Ein solches Magnetventil wird zum Steuern des Kältemittelflusses in dem Kältemittelkreislauf oder, im Falle der Ausführung des Magnetventils als Wegeventil mit mehreren Ausgängen, zum Umschalten eines Kältemittelflusses auf den einen oder den anderen von wenigstens zwei Verdampfern des Kältemittelkreislaufs eingesetzt.

Aus DE 37 18 94 A1, DE 195 46 384 A1 und DE 195 46 385 A1 sind Magnetventile der oben beschriebenen Art bekannt.

Aufgabe der Erfindung ist, ein Magnetventil der oben angegebenen Art zu schaffen, das einen einfacheren, schnelleren und damit preiswerteren Aufbau eines Kältemittelkreises erlaubt als bisher bekannte Magnetventile.

Die Aufgabe wird gelöst durch ein Magnetventil mit den Merkmalen des Anspruchs 1. Indem erfindungsgemäß der wenigstens eine Ausgang des Magnetventils durch eine Kapillare gebildet ist, kann das Magnetventil gleichzeitig auch die Aufgabe eines Entspannungselementes für das unter hohem Druck eingespeiste Kältemittel wahrnehmen. Dies reduziert die Zahl der Teile, die bei der Fertigstellung eines Kältemittelkreislaufs zusammengefügt werden müssen, und die Zahl der Verbindungsstellen zwischen ihnen. Daraus resultieren Einsparungen an Fertigungs-Arbeitszeit und -kosten, ohne dass Abstriche an der Qualität des Kältemittelkreislaufs in Kauf genommen werden müssen. Im Gegenteil reduziert die verringerte Zahl von Verbindungen noch die Gefahr von Leckagen des Kältemittelkreislaufs. Eine Spule ist zum Erzeugen eines Magnetfeldes in Längsrichtung des Ventilkörpers vorgesehen. Dies erlaubt eine einfache Steuerung des Ventilgliedes mit Hilfe eines einzigen Magnetfeldes durch lineares Hinundherbewegen. Um das Magnetfeld in den Ventilkörper einzuspeisen ist der Ventilkörper außerhalb des Innenraums der Spule angeordnet, und die Spule weist zwei den Ventilkörper berührende Polschuhe auf. Bei einer solchen Anordnung ist es möglich, auch nach vollständiger Montage des Käftemittelkreislaufs die Spule zu reparieren oder auszutauschen, ohne dass der Kältemittelkreislauf hierfür aufgetrennt werden muss.

Damit die den Ausgang des Magnetventils bildende Kapillare die Aufgabe eines Entspannungselementes für das unter hohem Druck stehende Kältemittel wahrnehmen kann, ist es wünschenswert, dass der Druckabfall zwischen Beginn und Ende der Kapillare ein Mehrfaches des Druckabfalls zwischen dem Eingang des Magnetventils und dem Beginn der Kapillare ist. Mit anderen Worten ist der Druckabfall am Ventilsitz des Magnetventils gegenüber dem in der Kapillare weitgehend vernachlässigbar.

Vorzugsweise weist das Magnetventil zwei Ausgänge auf, die jeweils durch eine Kapillare gebildet sind. Ein solches Magnetventil erlaubt den selektiven Betrieb zweier angeschlossener Verdampfer, z.B. eines Kühlbereiches und eines Gefrierbereiches eines kombinierten Kältegeräts.

Zweckmäßigerweise ist jeder Ausgang an einem Längsende des Ventilkörpers und der Eingang mittig am Ventilkörper angeordnet.

Eine weitere Vereinfachung des Aufbaus des Kältemittelkreislaufs und Reduzierung der Teilezahl ergibt sich, wenn der Eingang des Magnetventils durch ein an den Ventilkörper angefügtes Ausgangs-Leitungsstück eines Kältemitteltrockners gebildet ist, der üblicherweise in dem Kältemittelkreislauf eines Kältegeräts vorgesehen ist.

Weitere Merkmale und Vorteile der Erfindung ergeben sich aus der nachfolgenden Beschreibung eines Ausführungsbeispiels mit Bezug auf die Figuren. Es zeigen:
- Figuren 1 und 2: zwei Ansichten des Ventilkörpers eines erfindungsgemäßen Magnetventils;
- Figuren 3 und 4: zwei Ansichten eines Gehäuses des erfindungsgemäßen Magnetventils mit darin montierter Spule jeweils in der Fig. 1 bzw. 2 entsprechenden Perspektive;
- Fig. 5: eine Ansicht des zusammengefügten Magnetventils in einer Fig. 1 und Fig. 3 entsprechenden Perspektive; und
- Fig. 6: eine Draufsicht auf das Magnetventil der Fig. 5.

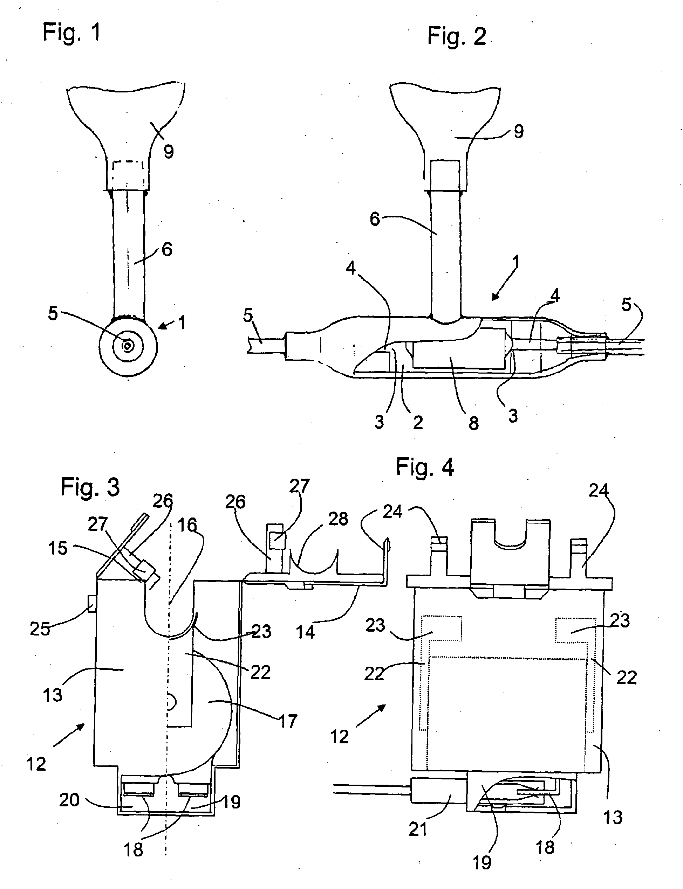

Die Figuren 1 und 2 zeigen den Ventilkörper 1 des erfindungsgemäßen Magnetventils in zwei Ansichten aus zueinander senkrechten Richtungen. Der Ventilkörper 1 ist in Fig. 2 teilweise aufgeschnitten gezeigt, um seine Arbeitsweise besser zu erläutern. Eine Kammer 2 im Innern des Ventilkörpers 1 ist an zwei Enden durch Ventilsitze 3 begrenzt, die jeweils eine mittige Bohrung aufweisen, die einen Ausgang 4 des Ventils bildet. Das Rohr des Ventilkörpers 1 ist zu seinen zwei Enden hin verjüngt, Kapillaren 5 sind in die Endöffnungen des Ventilkörpers 1 dicht eingelötet. Die Kapillaren 5 sind vorgesehen, um jeweils mit einem Verdampfer des Kältemittelkreislaufs, typischerweise einem dem Kühlbereich und einem dem Gefrierbereich eines Kombinations-Kältegeräts zugeordneten Verdampfer, verbunden zu werden. Länge und Durchmesser der Kapillaren 5 einerseits und Durchgangsquerschnitte im Ventilkörper 1 andererseits sind so aufeinander abgestimmt, dass der Druckabfall auf einer vom Kältemittel durchströmten Kapillare 5 wenigstens das Zweifache und vorzugsweise ein Vielfaches des Druckabfalls im Ventilkörper 1 beträgt.

Eine von einem Trockner 9 kommende Eingangsleitung 6 mit einem größeren Durchmesser als dem der Kapillaren 5 ist an einem mittig in die Kammer 2 mündenden Eingang 7 des Ventilkörpers 1 angelötet.

Ein Ventilglied 8 in Form eines zylindrischen Körpers aus ferromagnetischem Material ist in der Kammer 2 zwischen zwei Endpositionen bewegbar, in denen es jeweils einen der zwei Ausgänge 4 verschließt.

Die Figuren 3 und 4 zeigen jeweils in den Perspektiven der Figuren 1 und 2 entsprechenden Ansichten ein Gehäuse 12, das zur Aufnahme des Ventilkörpers 1 vorgesehen ist. Das Gehäuse 12 kann z.B. durch Spritzguß aus Kunststoff, z.B. aus Polypropylen, gefertigt sein. Es umfasst einen im wesentlichen quaderförmigen Hauptkörper 13, der an einer in den Figuren 3 und 4 oben liegenden Seite offen ist. Ein großes und ein kleines Deckelteil 14, 15 sind an gegenüberliegenden Seiten mit dem oberen Rand des Hauptkörpers 13 durch Folienscharniere verbunden.

Zwei gegenüberliegende Wände des Hauptkörpers 13 weisen jeweils einen U-förmigen Ausschnitt auf, der in seinem unteren Bereich halbkreisförmig verläuft. Der Ausschnitt 16 ist so gemessen, dass der Ventilkörper 1 mit geringem Spiel darin eingefügt werden kann.

Rechts einer Linie X-X in Fig. 3 ist der Hauptkörper 13 aufgeschnitten dargestellt. Man erkennt in seinem Inneren eine im wesentlichen zylinderförmige Spule 17 mit zwei Kontaktlaschen 18 für die Stromversorgung der Spule, die in eine unten an den Hauptkörper 13 angeformte Kammer 19 eingreifen. Die Kammer 19 weist ein Fenster 20 auf, durch das ein Steckverbinder 21 einführbar und mit den Kontaktlaschen 18 kontaktierbar ist.

An den Kern der Spule 17 sind zwei Eisen 22 angenietet, die in Fig. 4 gestrichelt dargestellt sind. Die Eisen 22 bilden am ihrem vom Spulenkern entfernten Ende zwei Polschuhe 23 in Form von halbzylindrischen Rinnen aus, die nach der Anbringung des Ventilkörpers 1 an diesem anliegen.

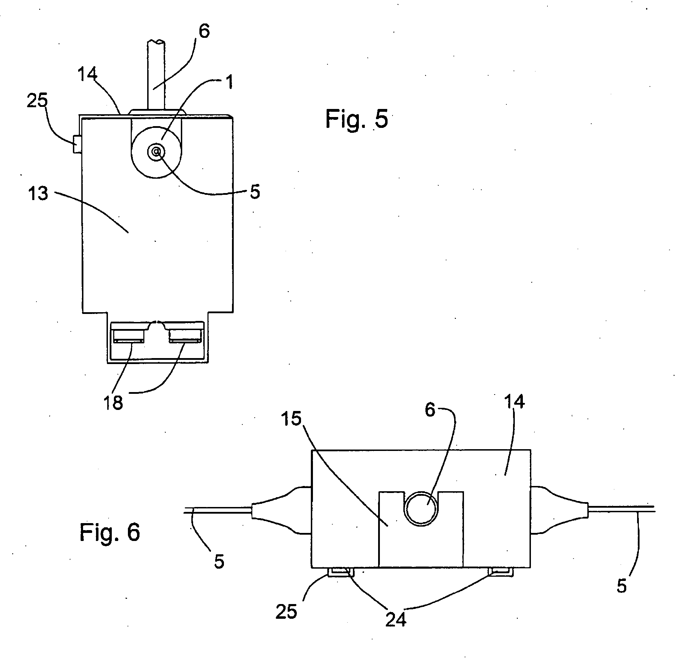

Die zwei Deckelteile 14, 15 sind so konstruiert, dass sie nach Anbringung des Ventilkörpers 1 zugeklappt und verrasten werden können, wie in Fig. 5 gezeigt. Sie decken die Oberseite des Gehäuses vollständig ab, mit Ausnahme eines von beiden Deckelteilen 14, 15 begrenzten kreisrunden Lochs, das die Eingangsleitung 6 aufnimmt, wie in Fig. 6 gezeigt. Zur Verriegelung im verschlossenen Zustand ist das große Deckelteil 14 mit zwei Rastzungen 24 versehen, die im verschlossenen Zustand in Ösen 25 an der gegenüberliegenden Wand des Hauptkörpers 13 eingreifen. Das kleine Deckelteil 15 ist mit Vorsprüngen versehen, die in geschlossenem Zustand des Deckels vom großen Deckelteil 14 überdeckt werden. So werden durch Verrasten des großen Deckelteils 14 in den Ösen 25 beide Deckelteile geschlossen gehalten.

Am großen Deckelteil 14 sind komplementär zu den Ausschnitten 16 des Hauptkörpers 13 halbkreisförmig ausgeschnittene Stege 28 angeformt, die zusammen mit den Ausschnitten 16 bei geschlossenem Deckel den Ventilkörper 1 rings umschließen. Hierdurch und durch die Halterung der Eingangsleitung 6 in dem von den zwei Deckelteilen 14, 15 gebildeten kreisrunden Loch ist der Ventilkörper 1 im Gehäuse 12 vollständig fixiert.

Wenigstens eines der Deckelteile 14, 15 weist einen bei geschlossenem Deckel ins Innere des Gehäuses gerichteten Vorsprung 26 auf, der einen Permanentmagneten 27 trägt. Der Vorsprung 26 ist jeweils so dimensioniert, dass der Permanentmagnet 27 bei geschlossenem Deckel etwa in Höhe der die zwei Kapillaren 5 verbindenden Achse des Ventilkörpers 1 zu liegen kommt. Dabei ist ein Pol des Permanentmagneten 27 dem Ventilkörper 1 zugewandt; wenn zwei Magnete verwendet werden, sind jeweils gleichnamige Pole dieser Magnete einander auf beiden Seiten des Ventilkörpers 1 zugewandt. Der Permanentmagnet 27 erzeugt ein in der Kammer 2 im wesentlichen axial orientiertes Magnetfeld, dass das Ventilglied 8 jeweils in Kontakt mit demjenigen der Ventilsitze 3 hält, in dessen Nähe es sich gerade befindet. Wenn auf die Spule 17 ein Stromstoß mit geeigneter Polarität gegeben wird, so erzeugt sie in der Kammer 2 ein der der Influenzmagnetisierung des Ventilglieds 8 entgegengerichtetes Magnetfeld, welches das Ventilglied 8 zum gegenüberliegenden Ventilsitz 3 treibt. So kann durch Beaufschlagen der Spule mit Pulsen wechselnder Polarität das Ventil geschaltet werden.

Das erfindungsgemäße Ventil vereinfacht den Aufbau eines Kältemittelkreislaufs, da durch die direkte Verbindung des Ventilkörpers mit den als Entspannungselement für das Kältemittel dienenden Kapillaren 5 die Zahl der benötigten Teile verringert wird. Die direkte Verbindung des Ventils mit dem Trockner 9 erlaubt es, diese beiden Elemente als eine kompakte Einheit gemeinsam zu montieren. Auch dies trägt zur Vereinfachung des Aufbaus des Kältemittelkreislaufs bei.

## Patentansprüche

1. Magnetventil für einen Kältemittelkreislauf, mit einem Ventilkörper (1), der einen Eingang (7) und wenigstens einen Ausgang (4) für das Kältemittel aufweist, einem im Innern des Ventilkörpers (1) zwischen zwei jeweils unterschiedlichen Schaltstellungen des Magnetventils entsprechenden Positionen beweglichen Ventilglied (8) und einer Spule (17) zum Erzeugen eines Magnetfeldes in Längsrichtung im Ventilkörper (1), **dadurch gekennzeichnet, dass** der wenigstens eine Ausgang (4) durch eine Kapillare (5) gebildet ist, dass der Ventilkörper (1) außerhalb des Kerns der Spule (17) angeordnet ist und dass die Spule (17) zwei den Ventilkörper berührende Polschuhe (23) zum Einkoppeln eines zur Längsachse des Ventilkörpers (1) parallelen Magnetfeldes in diesen aufweist.

2. Magnetventil nach Anspruch 1, **dadurch gekennzeichnet, dass** die Polschuhe (23) die Form von halbzylindrischen Rinnen haben.

3. Magnetventil nach Anspruch 1 oder 2, **dadurch gekennzeichnet, dass** die Abmessungen der Kapillare (5) so gewählt sind, dass beim Durchgang von Kältemittel durch das Magnetventil der Druckabfall zwischen Beginn und Ende der Kapillare (5) ein Mehrfaches des Druckabfalls zwischen dem Eingang (7) des Magnetventils und dem Beginn der Kapillare (5) ist.

4. Magnetventil nach Anspruch nach einem der vorhergehenden Ansprüche, **dadurch gekennzeichnet, dass** es zwei jeweils durch eine Kapillare (5) gebildete Ausgänge (4) aufweist.

5. Magnetventil nach einem der vorhergehenden Ansprüche, **dadurch gekennzeichnet, dass** jeder Ausgang (4) an einem Längsende des Ventilkörpers (1) und der Eingang (7) mittig am Ventilkörper (1) angeordnet ist.

6. Magnetventil nach einem der vorhergehenden Ansprüche, **dadurch gekennzeichnet, dass** der Eingang (7) durch ein an den Ventilkörper (1) angefügtes Ausgangs-Leitungsstück (6) eines Kältemitteltrockners (9) gebildet ist.

7. Magnetventil nach einem der vorhergehenden Ansprüche, **dadurch gekennzeichnet, dass** der Ventilkörper (1) und die Spule (17) in einem Gehäuse (12) mit einem im Wesentlichen quaderförmigen Hauptkörper (13) untergebracht sind.

8. Magnetventil nach Anspruch 7, **dadurch gekennzeichnet, dass** das Gehäuse (12) wenigstens ein über ein Folienscharnier mit dem Hauptkörper (13) verbundenes Deckelteil (14, 15) umfasst.

9. Magnetventil nach Anspruch 8, **dadurch gekennzeichnet, dass** das Deckelteil (14) mit Rastzungen (24) versehen ist, die in Ösen (25) am Hauptkörper (13) eingreifen.

10. Magnetventil nach Anspruch 8 oder 9, **dadurch gekennzeichnet, dass** zwei Deckelteile (14, 15) die Oberseite des Gehäuses (12) in zugeklapptem Zustand mit Ausnahme eines von beiden Deckelteilen (14, 15) begrenzten kreisrunden Lochs vollständig abdecken.

11. Magnetventil nach Anspruch 10, **dadurch gekennzeichnet, dass** eines der Deckelteile (15) Vorsprünge aufweist, die in geschlossenem Zustand des Deckels von dem anderen Deckelteil (14) überdeckt werden.

12. Magnetventil nach einem der Ansprüche 7 bis 11, **dadurch gekennzeichnet, dass** zwei gegenüberliegende Wände des Hauptkörpers (13) einen U-förmigen Ausschnitt (16) aufweisen, der in seinem unteren Bereich halbkreisförmig verläuft.

13. Magnetventil nach Anspruch 12, **dadurch gekennzeichnet, dass** der Ausschnitt (16) so bemessen ist, dass der Ventilkörper (1) mit geringem Spiel darin eingefügt werden kann.

14. Kältemittelkreislauf mit einem Magnetventil nach einem der vorhergehenden Ansprüche, **dadurch gekennzeichnet, dass** das Ende jeder Kapillare (5) in einen Verdampfer mündet.
